# EUROPEAN PATENT APPLICATION

(11) **EP 4 622 317 A1**
(43) Date of publication of application: **24.09.2025**
(21) Application number: 25164942.2
(22) Date of filing: 20.03.2025
(51) Int. Cl.: H04W 16/14, H04W 72/542

(54) **UTILIZING UE MEASUREMENTS OF NEIGHBORING CELLS FOR OPTIMAL CHANNEL SELECTION WITHIN CBRS NETWORKS**

(30) Priority: 20.03.2024 US 202463567518 P; 14.03.2025 US 202519079839
(71) Applicant: Mavenir Systems, Inc., Richardson, TX 75081 (US)
(72) Inventor: Dev, Abhilash, Bartlett, 60103 (US); Leelahakriengkrai, Rangsan, Allen, 75013 (US)
(74) Representative: Studio Torta S.p.A.

(57) **Abstract**

A method for optimizing operation of Citizens Broadband Radio Service (CBRS) network having a spectrum access system (SAS), a CBRS Domain Proxy (DP), and a CBRS device (CBSD) which is part of a Base Station (BS) serving user equipments (UEs), the method including: acquiring, by the CBSD or the DP, a frequency grant for a CBRS operating channel frequency and a list of available CBRS channel frequencies from the SAS; selecting, by the BS, specified UEs that are within the cell associated with the CBSD and receiving signal from the BS at a strength exceeding a specified threshold; instructing, by the BS, the selected UEs to perform measurements on neighboring cells and report any neighboring cell exceeding a specified interference threshold; and if the CBRS operating channel frequency experiences interference above the specified interference threshold, selecting the best available alternate CBRS channel frequency as the new operating channel frequency.

## Description

### BACKGROUND OF THE DISCLOSURE

### 1. Field of the Disclosure

The present disclosure is related to Open Radio Access Network (O-RAN) systems, and relates more particularly to O-RAN configuration for 4G and 5G Citizens Broadband Radio Service (CBRS) networks.

### 2. Description of Related Art

Citizens Broadband Radio Service (CBRS) is a wireless communication technology that operates in the 3.5 GHz band. CBRS was established by the Federal Communications Commission (FCC) in the United States to create a shared spectrum approach for wireless communication. CBRS is designed to support a wide range of applications, e.g., broadband access, Internet of Things (IoT) devices, and private wireless networks.

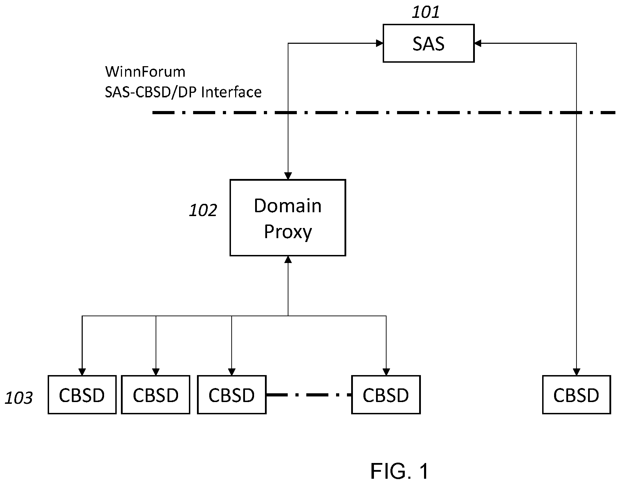

As shown in FIG. 1, which illustrates the CBRS architecture, the spectrum is allocated and controlled by Spectrum Access System (SAS) 101. The CBRS devices (CBSD) 103 and Domain Proxy (DP) 102 have an interface (referenced as "WinnForum SAS-CBSD/DP Interface" in FIG. 1) with the SAS 101 for this function. The interface is defined by WinnForum standard. Base Station (BS) is the RAN implementation that manages RAN protocol and operations facilitating communication between mobile devices and the network's core infrastructure. A CBSD is part of the BS mapped to the radio unit (RU) and operates within the CBRS band, and the CBSD is further responsible for accessing, managing, and utilizing the spectrum resources. When a BS is configured for multiple sectors, each with different RUs, then the BS would have multiple CBSDs mapped to respective RUs.

The CBRS spectrum is divided into three tiers: 1) Incumbent Access; 2) Priority Access License (PAL); and 3) General Authorized Access (GAA). Incumbent Access tier is reserved for the existing government and military users in the 3.5 GHz band. Priority Access License (PAL) tier, which is designed for commercial users who have obtained a license for the frequency band, is used for large-scale wireless networks and high-speed broadband. General Authorized Access (GAA) tier, which is available for unlicensed users who can access the frequency band on a non-interference basis, is designed for small-scale wireless networks and IoT devices.

The shared nature of the CBRS spectrum allows for more efficient use of the available frequency bands, providing opportunities for various wireless technologies, including 4G Long Term Evolution (LTE) and 5G networks, to deliver enhanced connectivity and capacity in both urban and rural areas.

The SAS plays a critical role in managing and coordinating the shared use of the CBRS spectrum. The SAS dynamically allocates and coordinates the spectrum usage, ensuring that PAL holders and GAA users can operate without causing harmful interference to incumbent users or each other. The SAS performs several important functions, e.g., Spectrum Coordination, Dynamic Spectrum Sharing, Interference Management, and Database Management. The SAS allows for the dynamic sharing of spectrum resources, optimizing the utilization of available frequencies while protecting critical incumbent systems. This approach aims to increase spectrum efficiency, encourage innovation, and foster the growth of wireless technologies and services.

CBSDs in a CBRS network are granted spectrum for usage. This is done via the WinnForum-defined methods of exchange of information between CBSDs and the SAS, or between Domain Proxy and the SAS. CBSDs or Domain Proxy (DP) requests grant for a particular CBRS channel from the SAS. If that channel is available, i.e., if the channel is not currently allocated for incumbent users or PAL users, then the SAS grants it to the requesting CBSD. Generally, the CBSD performs a spectrum inquiry to the SAS to learn about available channels for use and then selects from the list of available channels. Different SAS vendors provide the list of available channels, and sometimes this list is provided to the requesting CBSD without any guidance on their (channel) quality. This can result in CBSDs operating on channels that are already in use in their geographical area and leading to poor signal quality due to interference from other neighboring CBSDs.

In addition, there are scenarios where a GAA user CBSD is using an operating frequency granted to it by the SAS and experiences signal degradation after some other neighboring CBSD is granted the same channel it has been using. Furthermore, there are scenarios in which a CBSD already operating on a given channel needs to relinquish the channel when directed by the SAS, in which case the "bumped" CBSD would request another channel from the SAS, and there is a need for the CBSD or the DP to select the optimal CBRS channel.

Some SAS vendors provide a guidance on the quality of each CBRS channel in the spectrum inquiry response, thereby helping CBSDs and Domain Proxies to select the channel with the best quality for the CBRS grant request. However, not all SAS vendors provide such a guidance, leaving it solely to CBSDs and Domain Proxies to determine which channel to use in the network for cell operations.

In addition, some geographical areas have coordination between GAA channels. In such regions, the primary channels are pre-allocated to different telecom operators to use in their network. This allows the network operators to request the grant of pre-determined CBRS channels. However, the network operators need to submit their excessive interference report and the request for GAA Coexistence procedure to be initiated to their SAS administrators, in accordance with OnGo Alliance Technical Specification TS-2003. This procedure requires cooperation among the impacted operators and their SAS administrators, i.e., all operators need to accept the resulting pre-allocated channel plan, otherwise the SAS administrators will not enforce the coexistence plan, which means the interference will not be resolved.

Therefore, there is a need for i) a method to enable CBRS operators to select the optimal channels from all available channels from the list of channels shared by the SAS in response to the spectrum inquiry from CBSDs or Domain Proxy (DP), and/or ii) a method to enable a GAA user to determine the quality of CBRS channels that the GAA user needs to use.

### SUMMARY

Accordingly, what is desired is i) a method to enable CBRS operators to select the optimal channels from all available channels from the list of channels shared by the SAS in response to the spectrum inquiry from CBSDs or Domain Proxy (DP), and/or ii) a method to enable a GAA user to determine the quality of CBRS channels that the GAA user needs to use.

According to an example system and method of the present disclosure, optimal CBRS channels within a telecom operator's wireless network can be selected for each CBSD by utilizing the UE-based neighbor cell measurements which enable the wireless network to dynamically adapt and optimize the network performance, without the need for manual intervention by the operator.

According to an example system and method of the present disclosure, the following are implemented: a BS requests selected UEs to perform intra-frequency, inter-frequency, intra-radio-access-technology (intra-RAT) and/or inter-radio-access-technology (inter-RAT) neighbor cell measurements on all the frequencies made available to a corresponding CBSD of the BS; the UEs are configured to report the neighbor cells that exceed a specified interference threshold, intfTh measured as one or more of Reference Signal Received Power (RSRP), Reference Signal Received Quality (RSRQ), Signal to Interference plus Noise Ratio (SINR), selected by the BS; and if any undesirable neighbor cells exist which present significant interference (i.e., higher than the specified threshold) in the current operating CBRS channel, then the BS determines a need for CBRS channel reselection, otherwise, the BS continues to use the current operating frequency on the corresponding CBSD.

According to an example system and method of the present disclosure, in case the BS determines a need for CBRS channel reselection: the domain proxy (DP) or CBSD selects the best available CBRS channel determined from the UEs' measurement reports of the neighboring cells indicating less than the specified interference threshold (or no report), and sends a grant request for the best available CBRS channel to the Spectrum Access System (SAS); and once the grant for new channel is made available, the BS changes the operating frequency of the cell served by the CBSD to the newly granted channel.

For this application, the following terms and definitions shall apply:

The term "network" as used herein includes both networks and internetworks of all kinds, including the Internet, and is not limited to any particular type of network or inter-network.

The terms "first" and "second" are used to distinguish one element, set, data, object or thing from another, and are not used to designate relative position or arrangement in time.

The terms "coupled", "coupled to", "coupled with", "connected", "connected to", and "connected with" as used herein each mean a relationship between or among two or more devices, apparatus, files, programs, applications, media, components, networks, systems, subsystems, and/or means, constituting any one or more of (a) a connection, whether direct or through one or more other devices, apparatus, files, programs, applications, media, components, networks, systems, subsystems, or means, (b) a communications relationship, whether direct or through one or more other devices, apparatus, files, programs, applications, media, components, networks, systems, subsystems, or means, and/or (c) a functional relationship in which the operation of any one or more devices, apparatus, files, programs, applications, media, components, networks, systems, subsystems, or means depends, in whole or in part, on the operation of any one or more others thereof.

The above-described and other features and advantages of the present disclosure will be appreciated and understood by those skilled in the art from the following detailed description, drawings, and appended claims.

### DESCRIPTION OF THE DRAWINGS

FIG. 1 is a block diagram illustrating the CBRS architecture.
FIG. 2 is a schematic diagram illustrating the various network components and an example sequence of channel evaluation within a CBSD serving a CBRS cell.
FIG. 3 is a flowchart of an example channel selection (or reselection) within a CBSD serving a CBRS cell.
FIG. 4 illustrates selection of UEs and measurements for channel quality assessment by a BS.

### DETAILED DESCRIPTION

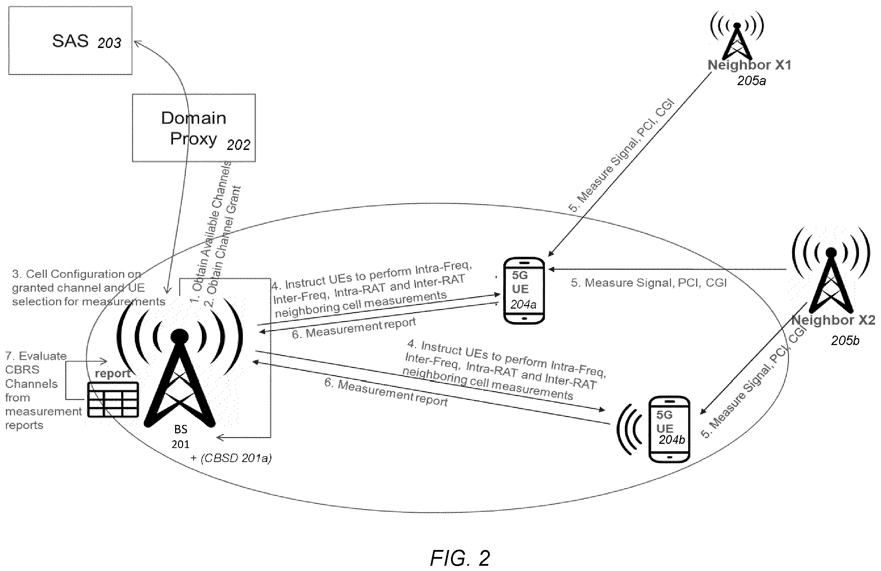

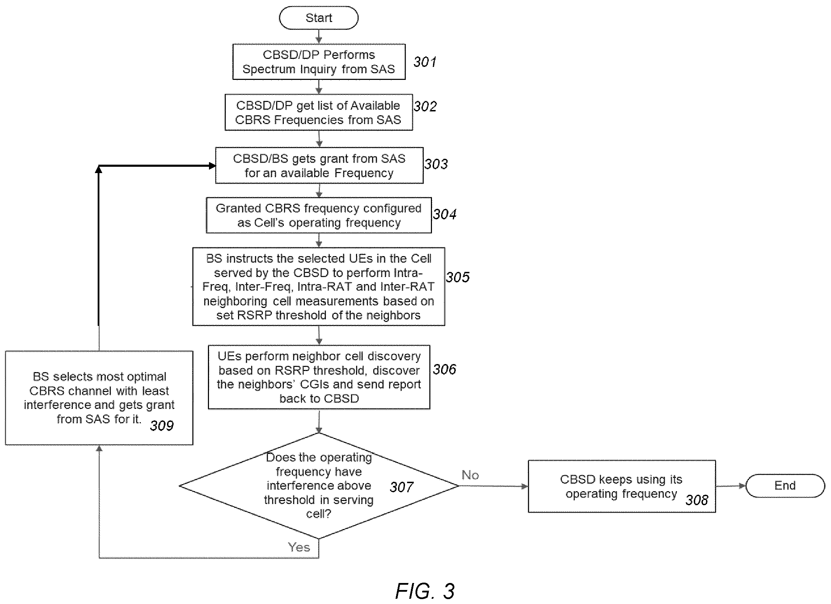

In an example system and method according to the present disclosure, optimal CBRS channels within a telecom operator's wireless network can be selected for each CBSD by utilizing the UE-based neighbor cell measurements which enable the wireless network to dynamically adapt and optimize the network performance, without the need for manual intervention by the operator. By utilizing real-time data and methodologies to make intelligent decisions on CBRS channels, the example system and method according to the present disclosure improve the spectrum efficiency and quality of the CBRS radio network. The example system and method according to the present disclosure will be described in detail in connection with FIGS. 2 and 3. FIG. 2 is a schematic diagram illustrating the various network components and an example sequence of channel evaluation within a CBSD serving a CBRS cell. FIG. 3 is a flowchart of an example channel selection (or reselection) within a CBSD serving a CBRS cell.

Initially, one of domain proxy (DP) 202 or CBSD 201a (of BS 201) performs spectrum inquiry with Spectrum Access System (SAS) 203 (see, e.g., box 301 of FIG. 3; step 1 of FIG. 2, i.e., "Obtain Available Channels"). In response, SAS 203 sends a list of all available channels (frequencies) to CBSD 201a (of BS 201) (see, e.g., box 302 of FIG. 3). Next, CBSD 201a (of BS 201) obtains grant on one of the CBRS channels and brings up a cell using that channel as operating frequency (see, e.g., boxes 303 and 304 of FIG. 3; step 2 of FIG. 2, i.e., "Obtain Channel Grant", and portion of step 3 of FIG. 2, "Cell configuration on granted channel"). BS 201 selects a group of UEs (portion of step 3 of FIG. 2, "UE selection for measurements"), and BS 201 configures (instructs) the selected UEs (e.g., 204a and 204b of FIG. 2) in the cell served by the CBSD 201a to perform the neighbor cell (neighbors 205a and 205b of FIG. 2) measurements, e.g., intra-frequency, inter-frequency, intra-radio-access-technology (intra-RAT) and/or inter-radio-access-technology (inter-RAT) neighbor cell measurements, e.g., based on specified reference signal received power (RSRP) threshold of the neighbor cells (see, e.g., box 305 of FIG. 3; step 4 of FIG. 2). The UEs (e.g., 204a and 204b of FIG. 2) in the cell served by the CBSD 201a obtains the following information regarding the serving cell as well as the neighbor cells: signal strengths, physical cell identifiers (PCIs) and Cell Global Identities (CGIs), and the UEs send the obtained information (measurement reports) back to the CBSD 201a (see, e.g., box 306 of FIG. 3; steps 5 and 6 of FIG. 2). In an example embodiment, the CBSD can identify (and/or filter the measurement reports), based on the CGI, cells belonging to network operators other than the network operator of the BS. BS 201 consolidates the measurement reports from the UEs (e.g., 204a and 204b) to determine the channel quality of the CBRS channel (frequency) in use, i.e., the BS 201 determines whether the CBRS channel (frequency) in use in the serving cell is sufficiently high quality, e.g., based on the number of neighbor cells found and their signal strengths (interferences), which data may be compiled over a period of time. This determination is represented in the decision box 307 in FIG. 3 and step 7 of FIG. 2. If the CBRS channel (frequency) in use is determined to have interference below a specified threshold in the serving cell (NO flow path from box 307), then the CBSD 201a continues to use the CBRS channel (as shown in box 308 of FIG. 3). If the CBRS channel (frequency) in use is determined to have interference above a specified threshold in the serving cell (YES flow from box 307), then the above-described process steps are repeated by the CBSD 201a obtaining a grant for a different CBRS channel (e.g., optimal CBRS channel with the least interference) from SAS 203 (as summarized in box 309 of FIG. 3) by returning to box 303 of FIG. 3, and using that new CBRS channel as the operating frequency, and optionally proceeding with neighbor cell measurements from the UEs (e.g., 204a and 204b). The inter-frequency measurements previously performed within the serving cell provides the BS 201 with information on the quality of other available CBRS channels, which information is utilized for the selection of the different CBRS channel.

According to an example embodiment, to obtain the most meaningful measurement reports from UEs, the BS can configure the measurement events as the trigger in the selected UEs, which configuration filters out neighboring cell(s) with weak signals from the measurement reports. Furthermore, it is expected that the UEs that are in a weak coverage area (e.g., due to the distance from the CBSD, terrain and/or other geographical factors) would not be good candidates to determine the channel quality. These measurement filters can be utilized by the BS to select the ideal UE measurements and/or ideal UEs for performing the measurements.

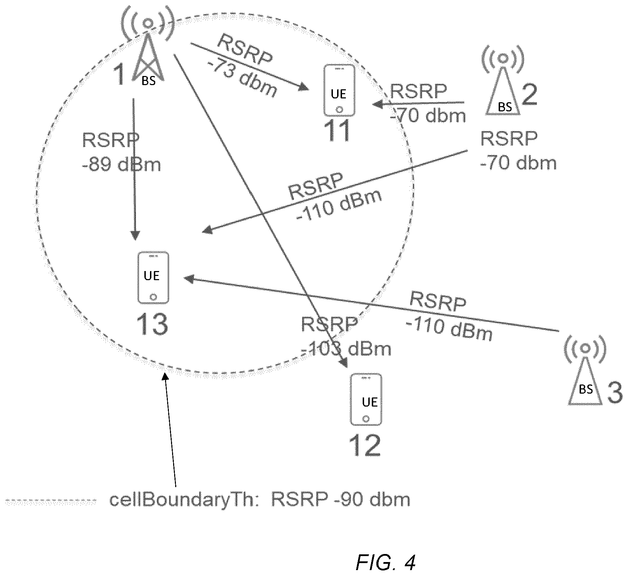

According to an example embodiment, the UEs are selected by configuring the measurement event trigger when the signal strength measurement of the serving cell at the UE is higher than a specified threshold, e.g., Event A1 in Long Term Evolution (LTE) and 5G New Radio (NR), on all Radio Resource Control (RRC)-connected UEs. The UEs that report the A1 Event are selected for performing measurements on the neighboring cells. These UEs are illustrated as being within the cellBoundaryTh (represented by the dashed circle) associated with the base station (BS) 1 in FIG 4. In the example scenario illustrated in FIG. 4, by configuring the A1 event with RSRP measurement and threshold to -90 dBm, UE 11 and UE 13 are selected for neighboring cell measurements. Subsequently, the BS 1 shown in FIG. 4 configures the measurement event trigger when the signal strength measurement of the neighboring cell at the UE is higher than a specified threshold, e.g., Event A4 for intra-RAT and Event B1 for inter-RAT. This is configured on the selected UEs within the cellBoundaryTh shown in FIG. 4 as the next step to perform neighboring cell measurements in which the UEs report the neighboring cells IDs and their respective signal strengths. The interference threshold, intfTh, is configured to omit the neighboring cells that do not cause serious interference for the UEs.

In the example scenario illustrated in FIG. 4, BS 1 (with associated CBSD) serving the associated cell (which cell is referred to as Cell 1) defined by cellBoundaryTh (represented by the dashed circle) of the CBRS spectrum selects RRC-connected UEs 11, 12, and 13 to configure A1 measurement on each of them to determine the UEs near the CBSD, i.e., the UEs receiving strong signal from the CBSD. By setting an appropriate RSRP threshold, e.g., -90 dBm, UE 12 is filtered out. BS 1 (with associated CBSD) then configures UE 11 and UE 13 to perform the neighbor cell measurements by using appropriate thresholds for measurement events A4 (for intra-RAT) and B1 (for inter-RAT). If the threshold for neighbor cell RSRP is 90dBm, the BS 1 shall only see the cell associated with BS 2 (which cell is referred to as Cell 2 herein) identified in the measurement report.

Depending on the operating frequency of the Cell 2, the BS 1 shall determine whether the operating frequency of the CBSD (of BS 1) serving Cell 1 is usable or needs to be changed. The inter-frequency measurement performed within Cell 1 provides the BS 1 with information on the quality of other CBRS channels, which information is utilized by the BS 1 for CBRS channel selection decisions. For example, if Cell 2 is in the same CBRS channel as Cell 1, then Cell 2 will cause serious interference to the UEs in Cell 1, and therefore, the BS 1 will attempt to change the CBRS channel. If the BS 1 can find a suitable alternative CBRS channel from the UE measurement reports received in response to the spectrum inquiry, e.g., a CBRS channel with low or no interference from other cells, BS 1 (with associated CBSD) will relinquish the current CBRS channel and acquire the new one from the SAS. According to an example embodiment, the CBSD or the DP is configured to select a specific channel frequency with least interference as the best available alternate CBRS channel frequency, wherein the specific channel frequency with least interference is determined based on the number of neighboring cells and the RSRP for the respective available CBRS channel frequencies.

While the present disclosure has been described with reference to one or more exemplary embodiments, it will be understood by those skilled in the art that various changes may be made and equivalents may be substituted for elements thereof without departing from the scope of the present disclosure. In addition, many modifications may be made to adapt a particular situation or material to the teachings of the disclosure without departing from the scope thereof. Therefore, it is intended that the present disclosure not be limited to the particular embodiment(s) disclosed as the best mode contemplated, but that the disclosure will include all embodiments falling within the scope of the appended claims.

## Claims

1. A system for optimizing Citizens Broadband Radio Service (CBRS) network having a spectrum access system (SAS), comprising:
at least one CBRS device (CBSD) serving user equipments (UEs) in a cell associated with the CBSD, wherein the CBSD is part of a base station (BS) operated by a network operator; and
CBRS Domain Proxy (DP);
wherein:
a) one of the CBSD or the DP is configured to acquire a frequency grant for a CBRS operating channel frequency and a list of available CBRS channel frequencies from the SAS;
b) the BS is configured to select specified UEs that are i) within the cell associated with the CBSD, and ii) receiving signal from the BS at a strength exceeding a specified threshold, cellBoundaryTh;
c) the BS is configured to instruct the selected UEs to perform measurements on neighboring cells adjacent to the cell associated with the BS and report any neighboring cell exceeding a specified interference threshold, intfTh;
d) in the case the CBRS operating channel frequency is determined to experience interference above the specified interference threshold in the cell associated with the CBSD based on measurement reports sent by the selected UEs to the BS, then one of the CBSD or the DP is configured to select the best available alternate CBRS channel frequency as the new operating channel frequency of the cell associated with the CBSD.

2. The system of claim 1, wherein:
in the case the CBRS operating channel frequency is determined to experience interference below the specified interference threshold in the cell associated with the CBSD based on measurement reports sent by the selected UEs to the BS, then the CBRS operating channel frequency is continued to be used for the cell associated with the CBSD.

3. The system of claim 2, wherein the BS is configured to instruct the selected UEs to perform at least one of the following neighboring cell measurements on all frequencies available to the CBSD: intra-frequency, inter-frequency, intra-radio-access-technology (intra-RAT), and inter-radio-access-technology (inter-RAT).

4. The system of claim 1,wherein the BS triggers one of the DP or the CBSD to acquire the list of available CBRS frequencies from the SAS.

5. The system of claim 1, wherein the measurement reports sent by the selected UEs to the BS comprise neighboring cell measurements, Cell Global Identity (CGI), and reference signal received power (RSRP) of each neighboring cell for which measurements are performed.

6. The system of claim 5, wherein the CBSD identifies, based on the CGI, neighboring cells belonging to network operators other than the network operator of the BS.

7. The system of claim 5, wherein the one of the CBSD or the DP is configured to select a specific channel frequency with least interference as the best available alternate CBRS channel frequency, wherein the specific channel frequency with least interference is determined based on the number of neighboring cells and the RSRP for the respective available CBRS channel frequencies.

8. The system of claim 3, wherein the measurement reports sent by the selected UEs to the BS comprise neighboring cell measurements, Cell Global Identity (CGI), and reference signal received power (RSRP) of each neighboring cell for which measurements are performed.

9. A method for optimizing operation of Citizens Broadband Radio Service (CBRS) network having a spectrum access system (SAS), a CBRS Domain Proxy (DP), and at least one CBRS device (CBSD) serving user equipments (UEs) in a cell associated with the CBSD, wherein the CBSD is part of a base station (BS) operated by a network operator, the method comprising:
a) acquiring, by one of the CBSD or the DP, a frequency grant for a CBRS operating channel frequency and a list of available CBRS channel frequencies from the SAS;
b) selecting, by the BS, specified UEs that are i) within the cell associated with the CBSD, and ii) receiving signal from the BS at a strength exceeding a specified threshold, cellBoundaryTh;
c) instructing, by the BS, the selected UEs to perform measurements on neighboring cells adjacent to the cell associated with the BS and report any neighboring cell exceeding a specified interference threshold, intfTh;
d) in the case the CBRS operating channel frequency is determined to experience interference above the specified interference threshold in the cell associated with the CBSD based on measurement reports sent by the selected UEs to the BS, selecting, by the one of the CBSD or the DP, the best available alternate CBRS channel frequency as the new operating channel frequency of the cell associated with the CBSD.

10. The method of claim 9, wherein:
in the case the CBRS operating channel frequency is determined to experience interference below the specified interference threshold in the cell associated with the CBSD based on measurement reports sent by the selected UEs to the BS, then the CBRS operating channel frequency is continued to be used for the cell associated with the CBSD.

11. The method of claim 10, wherein the BS instructs the selected UEs to perform at least one of the following neighboring cell measurements on all frequencies available to the CBSD: intra-frequency, inter-frequency, intra-radio-access-technology (intra-RAT), and inter-radio-access-technology (inter-RAT).

12. The method of claim 9, wherein one of:
i) the BS triggers one of the DP or the CBSD to acquire the list of available CBRS frequencies from the SAS; or
ii) the measurement reports sent by the selected UEs to the BS comprise neighboring cell measurements, Cell Global Identity (CGI), and reference signal received power (RSRP) of each neighboring cell for which measurements are performed.

13. The method of claim 12, wherein one of:
i) the CBSD identifies, based on the CGI, neighboring cells belonging to network operators other than the network operator of the BS; or
ii) the one of the CBSD or the DP selects a specific channel frequency with least interference as the best available alternate CBRS channel frequency, wherein the specific channel frequency with least interference is determined based on the number of neighboring cells and the RSRP for the respective available CBRS channel frequencies.

14. The method of claim 11, wherein the measurement reports sent by the selected UEs to the BS comprise neighboring cell measurements, Cell Global Identity (CGI), and reference signal received power (RSRP) of each neighboring cell for which measurements are performed.

15. The method of claim 14, wherein one of:
i) the CBSD identifies, based on the CGI, neighboring cells belonging to network operators other than the network operator of the BS; or
ii) the one of the CBSD or the DP selects a specific channel frequency with least interference as the best available alternate CBRS channel frequency, wherein the specific channel frequency with least interference is determined based on the number of neighboring cells and the RSRP for the respective available CBRS channel frequencies.
